# EUROPÄISCHE PATENTSCHRIFT

(11) **EP 1 606 831 B1**
(45) Veröffentlichungstag und Bekanntmachung des Hinweises auf die Patenterteilung: **14.07.2010**
(21) Anmeldenummer: 04717018.8
(22) Anmeldetag: 04.03.2004
(51) Int. Cl.: H01G 4/30, H01C 1/144, H01C 7/112, H01G 4/232

(54) **ELEKTRISCHES VIELSCHICHTBAUELEMENT**
ELECTRIC MULTILAYER COMPONENT
COMPOSANT MULTICOUCHE ELECTRIQUE

(30) Priorität: 27.03.2003 DE 10313891
(43) Veröffentlichungstag der Anmeldung: 21.12.2005
(73) Patentinhaber: EPCOS AG, 81669 München (DE)
(72) Erfinder: FEICHTINGER, Thomas, 8010 Graz (AT); PUDMICH, Günter, 8580 Köflach (AT); BRUNNER, Sebastian, 8042 Graz (AT); KLEEWEIN, Alois, 8042 Graz (AT); KRUMPHALS, Robert, 8530 Deutschlandsberg (AT)
(74) Vertreter: Epping, Wilhelm
(86) Internationale Anmeldenummer: PCT/DE2004/000423
(87) Internationale Veröffentlichungsnummer: WO 2004/086432

(56) Entgegenhaltungen:
- DE-A- 10 120 253
- DE-A- 19 931 056
- US-A- 5 369 390
- US-A1- 2002 064 669
- US-A1- 2002 071 258
- US-B1- 6 351 369
- US-B1- 6 370 010
- US-B1- 6 496 355

## Beschreibung

Die Erfindung betrifft ein elektrisches Vielschichtbauelement dessen Grundkörper aus übereinandergestapelten Dielektrikumsschichten aufgebaut ist, zwischen denen Elektrodenflächen angeordnet sind.

Derartige Vielschichtbauelemente können je nach Beschaffenheit der Dielektrikumsschichten und der Elektrodenschichten als Kondensatoren, Varistoren oder temperaturabhängige Widerstände (Thermistoren) eingesetzt werden. Der Grundkörper von Varistoren ist häufig aus einer Mischung verschiedener Metalloxide, zum Beispiel auf der Basis von Zinkoxid hergestellt. Varistoren weisen eine nicht-lineare spannungsabhängige Widerstandsänderung auf, die zum Schutz eines elektrischen Schaltkreises vor Überspannung benutzt wird. Der Widerstandswert von Varistoren sinkt dabei mit steigender anliegender Spannung. Vielschichtbauelemente, die als Kondensatoren ausgebildet sind können Rauschen bei hohen wie bei niedrigen Spannungen absorbieren.

Aus der Druckschrift DE 199 31 056 A1 ist ein Vielschichtvaristor bekannt, bei dem zur Senkung des Widerstandes nicht überlappende Innenelektroden im Inneren des Grundkörpers angeordnet sind, Die Innenelektroden werden dabei auf den beiden Stirnseiten des Bauelements von großflächigen Kontaktschichten kontaktiert, die eine SMD-Montierung des Bauelements erlauben. Der Nachteil dieses herkömmlichen Bauelements besteht darin, daß aufgrund der großflächigen Kontaktschichten parasitäre Kapazitäten und Induktivitäten aufgebaut werden, die eine genaue Einstellung der elektrischen Charakteristika des Bauelements schwierig macht. Weiterhin benötigt ein derartiges Bauelement aufgrund der großen Kontaktschichten entsprechend viel Platz bei der Montage auf zum Beispiel Platinen. Weiterhin sind vor allem auch Module in dieser Bauweise, in die mehrere dieser Bauelemente integriert sind, besonders groß und weisen damit eine besonders niedrige Integrationsdichte auf.

In der Druckschrift US 2002/071258 A1 ist ein Mehrschichtkondensator mit einer Mehrzahl von leitfähigen Schichten in einem dielektrischen Grundkörper offenbart, wobei die leitfähigen Schichten in mehreren Stapeln angeordnet und mittels Vias miteinander und mit Lötpads auf dem Grundkörper elektrisch leitend verbunden sind.

In der Druckschrift US 6,351,369 B1 ist ein Mehrschichtkondensator mit einem Grundkörper mit einer Mehrzahl aufeinander angeordneter dielektrischer Schichten offenbart, die dem eine Mehrzahl von Paaren gebildet aus Innenelektroden angeordnet ist, die jeweils mittels Durchführungskontakten mit Außenelektroden umfassend leitfähige Pads mit Löt-Bumps elektrisch leitend verbunden sind.

In der Druckschrift US 6,370,010 B1 ist ein Kondensator mit einem Grundkörper aus einer Mehrzahl dielektrischer Schichten offenbart, zwischen denen eine Mehrzahl von Paaren gebildet aus Innenelektroden angeordnet sind, die mittels Via-Durchkontaktierungen elektrisch leitend mit Elektroden verbunden sind.

Aufgabe der vorliegenden Erfindung ist es, ein elektrisches Vielschichtbauelement mit hoher Integrationsdichte anzugeben, das zum einen deutlich reduzierte parasitäre Kapazitäten und Induktivitäten aufweist und zum anderen eine besonders einfache und platzsparende Montage auf zum Beispiel einer Platine erlaubt.

Diese Aufgabe wird erfindungsgemäß durch ein elektrisches Vielschichtbauelement nach Anspruch 1 und durch ein Verfahren nach Anspruch 29 gelöst. Vorteilhafte Ausgestaltungen des Vielschichtbauelements sind Gegenstand von Unteransprüchen.

Die Erfindung beschreibt ein elektrisches Vielschichtbauelement, dessen Funktion ausgewählt ist aus Kondensator, temperaturabhängigen Widerstand und Varistor. Das Vielschichtbauelement weist einen aus übereinandergestapelten Dielektrikumsschichten aufgebauten Grundkörper auf, wobei im Grundkörper mehrere mit Abstand zwischen den Dielektrikumsschichten angeordnete elektrisch leitende Elektrodenflächen angeordnet sind, in denen Elektroden ausgebildet sind. Weiterhin sind zumindest zwei Lotkugeln (Bumps) zur elektrischen Kontaktierung des Bauelements auf der Oberfläche des Grundkörpers angeordnet, wobei eine Lotkugel jeweils über im Grundkörper angeordnete Durchkontaktierungen elektrisch leitend mit zumindest einer Elektrode verbunden ist, so daß ein erster und ein zweiter Elektrodenstapel ausgebildet ist. Elektrodenstapel im Sinne der Erfindung können dabei nicht nur mehrere Elektroden, sondern im Grenzfall auch nur eine Elektrode umfassen. Die elektrisch leitenden Durchkontaktierungen, die die Elektroden mit den Lotkugeln verbinden werden auch als Vias bezeichnet. Aufgrund der besonderen Kontaktierung der Elektroden ist es besonders einfach möglich mehrere passive Bauelemente, Varistoren, Thermistoren oder Kondensatoren in ein erfindungsgemäßes elektrisches Vielschichtbauelement zu integrieren.

Ein weiterer Vorteil des erfindungsgemäßen elektrischen Bauelements gegenüber herkömmlichen Bauelementen, die beispielsweise in SMD-Bauweise ausgeführt sind, besteht darin, daß aufgrund der Lotkugeln, die zur elektrischen Kontaktierung der im Grundkörper angeordneten Elektroden dienen, eine wesentlich einfachere Kontaktierung des Bauelements im Vergleich zu herkömmlichen Bauelementen möglich ist. Die Lotkugeln beanspruchen in der Regel wesentlich weniger Platz auf der Oberfläche des Grundkörpers als großflächige Kontaktschichten, die bei herkömmlichen SMD-Kontaktierungen verwendet werden. Aufgrund der geringen Größe der Lotkugeln werden darüber hinaus die parasitären Kapazitäten und Induktivitäten im erfindungsgemäßen Bauelement erheblich reduziert. Aufgrund der geringen Größe der Lotkugeln und der Durchkontaktierungen ist es weiterhin möglich eine Vielzahl von Einzelbauelementen mit hoher Integrationsdichte in dem elektrischen Vielschichtbauelement zu integrieren, so daß besonders einfach Vielschichtbauelementmodule mit mehreren passiven Bauelementen aufgebaut werden können.

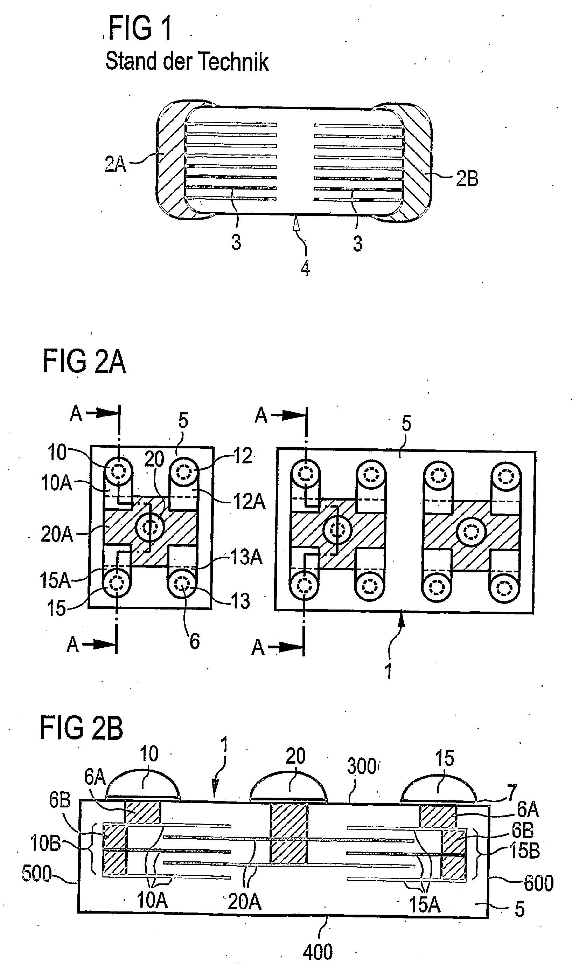

Ein Elektrodenstapel eines erfindungsgemäßen Vielschichtbauelements kann mehrere, in unterschiedlichen Elektrodenflächen angeordnete Elektroden umfassen, wobei diese Elektroden mittels der im Grundkörper angeordneten Durchkontaktierungen untereinander elektrisch leitend verbunden sind (siehe z.B. Figur 2B).

In einer vorteilhaften Ausgestaltung des erfindungsgemäßen Vielschichtbauelements stehen sich die zumindest zwei Elektrodenstapel im Grundkörper gegenüber, wobei zwischen den beiden Elektrodenstapeln ein Bereich des Grundkörpers vorhanden ist, der keine Elektrodenschichten aufweist. Dies bedeutet, daß die Elektroden des ersten und zweiten Elektrodenstapels nicht miteinander überlappen. Eine derartige Ausgestaltung der Elektroden im Grundkörper ist besonders vorteilhaft dazu geeignet, den Widerstand des Bauelements je nach genauer Ausführung der Elektroden zu variieren.

In einer weiteren vorteilhaften Ausführungsform sind die Elektroden im Grundkörper überlappend angeordnet. Wenn Elektroden von dem unterschiedlichen ersten und zweiten Elektrodenstapel überlappen, kann im Überlappungsbereich der Elektroden von unterschiedlichen Elektrodenstapeln besonders einfach ein Kondensatoreffekt erzielt werden, wenn sie mit unterschiedlichen Potentialen beaufschlagt werden.

Weiterhin ist es möglich, zusätzliche, elektrisch leitende Elektroden im Grundkörper anzuordnen, die keine der Lotkugeln und keinen der Elektrodenstapel kontaktieren. Auf diese Weise können zwei getrennte überlappende Elektrodenstrukturen intern seriell verschaltet werden. Derart ausgestaltete Elektroden, vor allen Dingen wenn sie mit Elektroden des ersten oder zweiten Elektrodenstapels überlappen, sorgen für eine größere Gleichförmigkeit der elektrischen Charakteristika eines erfindungsgemäßen Vielschichtbauelements. Mittels dieser Elektroden lassen sich also erfindungsgemäße Vielschichtbauelemente herstellen, die ein besonders homogenes elektrisches Verhalten zeigen.

Vorteilhafterweise kann weiterhin ein dritter Elektrodenstapel, der zumindest eine zusätzlich vorhandene elektrisch leitende Elektrode umfaßt, im Grundkörper vorhanden sein und über Durchkontaktierungen elektrisch leitend mit einer dritten Lotkugel auf der Oberfläche des Grundkörpers verbunden sein. Die Elektrode des dritten Elektrodenstapels kann dann mit einer Elektrode des ersten und des zweiten Elektrodenstapels überlappen. Eine derartige Ausführungsform erlaubt die interne Verschaltung von mehreren passiven Bauelementen. Dadurch reduziert sich besonders vorteilhaft der Verschaltungs- und Verdrahtungsaufwand, wenn das Vielschichtbauelement auf einer Platine montiert wird, wobei auch Platz auf der Platine eingespart wird. Der dritte Elektrodenstapel kann dabei z.B. als gemeinsame Massekontaktierung dienen.

In einer Ausführung der Erfindung überlappen die Elektroden des ersten und zweiten Elektrodenstapels nicht, wobei diese Elektroden dann vorteilhafterweise in erster Linie zur Variierung des Widerstandes des Vielschichtbauelements dienen. Diese Ausführung kann weiterhin vorteilhaft für den Aufbau von Bauelementen mit sehr kleinen Kapazitäten sein.

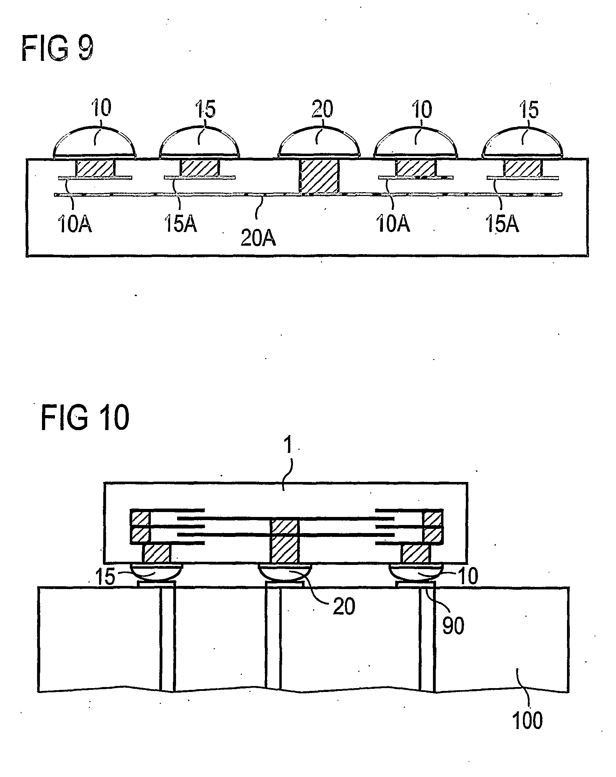

In einer weiteren Ausführungsform können der erste, zweite und dritte Elektrodenstapel jeweils eine Elektrode umfassen. Dabei überlappt dann nur die Elektrode des dritten Elektrodenstapels mit den Elektroden des ersten und zweiten Elektrodenstapels. Die Elektroden des ersten und zweiten Elektrodenstapels überlappen dabei nicht. Diese Ausführungsform erlaubt besonders einfach die Integration von Vielschichtkondensatoren im erfindungsgemäßen Vielschichtbauelement, wobei im Falle einer Verschaltung die Elektrode des dritten Elektrodenstapels jeweils das gleiche Potential hat und die Elektroden des zweiten und dritten Elektrodenstapels davon unterschiedliche Potentiale aufweisen können. Dabei können abgesehen vom zweiten und ersten Elektrodenstapel mit jeweils einer Elektrode noch weitere Elektrodenstapel mit jeweils einer Elektrode vorhanden sein, die mit der Elektrode des dritten Elektrodenstapels überlappen (siehe zum Beispiel Figur 9).

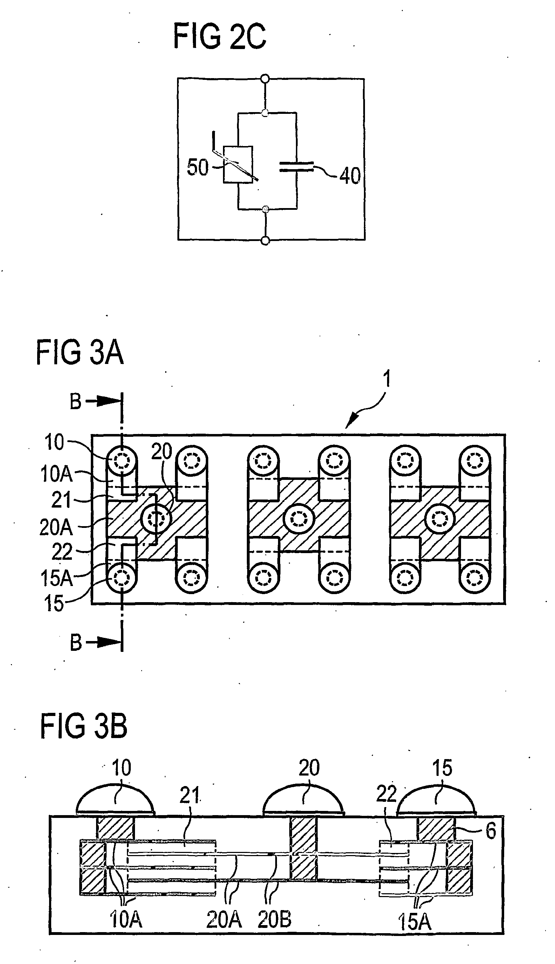

In einer weiteren, vorteilhaften Variante sind die Überlappungsflächen zwischen den Elektroden der unterschiedlichen Elektrodenstapel unterschiedlich groß. Wie bereits oben genannt kommt aufgrund der Überlappung von Elektroden unterschiedlicher Elektrodenstapel, die im Falle einer Verschaltung unterschiedliches Potential haben ein Kondensatoreffekt zustande. Dabei resultieren aufgrund der unterschiedlich großen Überlappungsflächen unterschiedliche Kapazitäten (siehe beispielsweise Figuren 3A und 3B). Dadurch läßt sich vorteilhafterweise eine weitere Variation der elektrischen Eigenschaften der einzelnen passiven Bauelemente in dem erfindungsgemäßen elektrischen Vielschichtbauelement erreichen. Dabei ist es möglich, daß die Überlappungsflächen zwischen den Elektroden des dritten Elektrodenstapels und den Elektroden des zweiten und ersten Elektrodenstapels ungleich groß sind (siehe beispielsweise Figuren 3A und 3B).

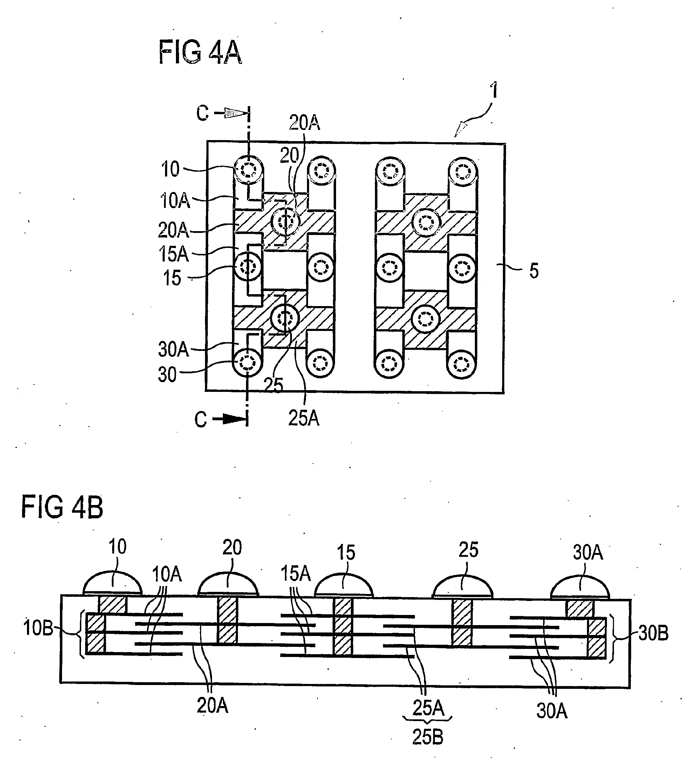

In erfindungsgemäßen Vielschichtbauelementen können weiterhin ein vierter und ein fünfter Elektrodenstapel aus elektrisch leitenden Elektroden vorhanden sein, die über Durchkontaktierungen mit einer vierten und fünften Lotkugel auf der Oberfläche des Grundkörpers vorhanden sind. Dabei überlappen die Elektroden des vierten Elektrodenstapels mit den Elektroden des zweiten und des fünften Elektrodenstapels (siehe beispielsweise Figuren 4A und 4B). Mittels dieser Ausführungsform lassen sich weitere besonders einfache interne Verschaltungen realisieren.

Ferner können weitere Elektrodenstapel, die mit Lotkugeln über Durchkontaktierungen verbunden sind, im Grundkörper vorhanden sein. Dadurch können weitere passive Bauelemente, beispielsweise die oben genannten Kondensatoren, Varistoren oder Termistoren im erfindungsgemäßen Vielschichtbauelement angeordnet werden, so daß besonders viele Bauelemente bei hoher Integrationsdichte auf besonders kleinem Volumen vorhanden sind.

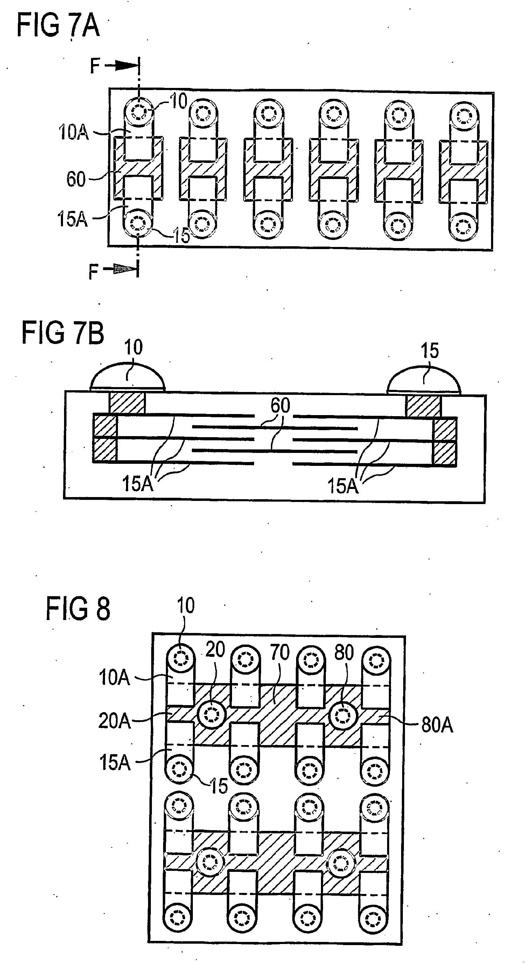

Im erfindungsgemäßen Vielschichtbauelement können dabei günstigerweise einige der Elektroden, die unterschiedlichen Elektrodenstapel angehören, elektrisch leitend miteinander verbunden sein (siehe beispielsweise Figur 8). Mittels dieser elektrischen Verbindungen lassen sich weitere besonders einfache und vorteilhafte, auf den jeweiligen Verwendungszweck angepaßte, interne Verschaltungen im erfindungsgemäßen Vielschichtbauelement realisieren.

Weiterhin ist es besonders vorteilhaft wenn alle Lotkugeln auf derselben Hauptoberfläche des Grundkörpers eines erfindungsgemäßen Vielschichtbauelements angeordnet sind. Dann ist es besonders einfach möglich, beispielsweise mittels Flip-Chip-Anordnung das Bauelement über die Lotkugeln mit einem Trägersubstrat zu verbinden. Die Flip-Chip-Bauweise erlaubt dabei ein besonders platzsparendes und einfaches Montieren eines erfindungsgemäßen Vielschichtbauelements auf einem Trägersubstrat.

Ferner können die Dielektrikumsschichten vorteilhafterweise ein keramisches Material umfassen, da Elektrokeramiken besonders geeignet sind. Das keramische Material kann damit eine Varistorkeramik auf der Basis von ZnO-Bi oder ZnO-Pr umfassen. Das keramische Material kann weiterhin eine Kondensatorkeramik umfassen, die ausgewählt ist aus sogenannten NP0-Keramiken, z.B. (Sm,Pa) NiCdO₃. Diese Keramiken weisen temperaturabhängige εᵣ-Werte auf und sind nicht ferroelektrische Keramiken. Weiterhin können auch ferroelektrische Keramiken mit hohen Dielektrizitätskonstanten, sowie dotiertes BaTiO₃ und sog. Sperrschichtkeramiken verwendet werden. Diese dielektrischen Keramiken werden im Buch "Keramik" von H. Schaumburg (Hrsg.), B.G. Teubner-Verlag Stuttgart 1994 auf den Seiten 351 bis 352 und 363 beschrieben, wobei auf diese Seiten vollinhaltlich Bezug genommen wird. Darüber hinaus kann das keramische Material aus Thermistorkeramiken, NTC-Keramiken, z.B. Nickel Mangan Spinelle und Perowskite ausgewählt sein. Es können aber auch dielektrische nichtkeramische Materialien, z.B. Gläser verwendet werden.

Bei einer Ausführungsform eines erfindungsgemäßen Bauelements sind mindestens fünf Elektrodenstapel im Grundkörper vorhanden, wobei der Grundkörper eine Grundfläche aufweist, die kleiner als 2,5 mm² ist. Die fünf Lotkugeln zur Kontaktierung der Elektrodenstapel sind dabei auf derselben Hauptoberfläche angeordnet. Bei erfindungsgemäßen Vielschichtbauelementen mit mehr passiven integrierten Bauelementen können beispielsweise mindestens neun Elektrodenstapel im Grundkörper vorhanden sein, wobei der Grundkörper eine Grundfläche aufweist die kleiner als 5 mm² ist. Zur elektrischen Kontaktierung der neun Elektrodenstapel sind neun Lotkugeln auf derselben Hauptoberfläche des Grundkörpers zur besonders einfachen Flip-Chip-Kontaktierung vorhanden. Wenn elf Elektrodenstapel im Grundkörper vorhanden sind, weist der Grundkörper in der Regel eine Grundfläche auf, die kleiner als 8 mm² ist, wobei die elf Lotkugeln zur Kontaktierung der Elektrodenstapel ebenfalls auf der selben Hauptoberfläche zur Flip-Chip-Kontaktierung angeordnet sind.

Weiterhin sind bei dem erfindungsgemäßen Bauelement vorteilhafterweise alle Dielektrikumschichten entweder eine Varistor-, Thermistor- oder Kondensatorkeramik, so daß keine Dielektrikumsschichten im Grundkörper vorhanden sind, die nicht eine dieser elektrischen Eigenschaften aufweisen.

Im folgenden soll das erfindungsgemäße Vielschichtbauelement anhand von schematischen Figuren und Ausführungsbeispielen noch näher erläutert werden.
- Figur 1: zeigt ein herkömmliches Bauelement im Querschnitt.
- Die Figuren 2A bis 9: zeigen verschiedene Ausführungsformen von erfindungsgemäßen Vielschichtbauelementen in der Aufsicht und im Querschnitt.
- Figur 10: zeigt ein erfindungsgemäßes Vielschichtbauelement, das auf einem Trägersubstrat montiert ist.

Figur 1 zeigt ein herkömmliches keramisches Vielschichtbauelement, beispielsweise einem Varistor 4 im Querschnitt. Auf sich gegenüberliegenden Stirnflächen des Bauelements sind großflächige Kontaktschichten 2A und 2B angeordnet die im Inneren des Grundkörpers befindliche Elektroden 3 kontaktieren, wobei zwei Elektrodenstapel gebildet werden, die jeweils nur eine Kontaktschicht kontaktieren. Aufgrund der besonders großen Kontaktflächen 2A und 2B sind im erheblichen Umfang parasitäre Kapazitäten und Induktivitäten in diesem herkömmlichen Bauelement vorhanden. Weiterhin wird zur Montage dieses Bauelements auf einem Träger aufgrund der großen Kontaktflächen relativ viel Platz benötigt.

Figur 2A zeigt in der Aufsicht zwei verschiedene Ausführungsformen eines erfindungsgemäßen elektrischen Vielschichtbauelements. Dabei sind in der Aufsicht die Lotkugeln 10, 15 und 20 sowie weitere Lotkugeln zu erkennen. Weiterhin sind gestrichelt die Durchkontaktierungen 6 angedeutet, die sich unterhalb der Lotkugeln 10, 15 und 20 im keramischen Grundkörper befinden. Weiterhin sind jeweils die obersten Elektroden eingezeichnet, die in der Aufsicht zu sehen sind. Dabei ist eine erste Lotkugel 10 vorhanden, die eine erste Elektrode 10A kontaktiert. Dieser steht im Bauelement eine zweite Lotkugel 15 gegenüber, die eine zweite Elektrode 15A kontaktiert. Weiterhin ist eine dritte Lotkugel 20 vorhanden, die eine dritte Elektrode 20A elektrisch leitend kontaktiert. Darüber hinaus sind zwei weitere Elektroden 12 und 13 mit zwei weiteren Lotkugeln 12A und 13A zu erkennen, die relativ zur dritten Elektrode 20A die gleiche Position einnehmen, wie die erste und zweite Elektrode. Die Überlappungsbereiche zwischen den Elektrodenschichten, die unterschiedliche Lotkugeln kontaktieren, stellen Kondensatoren dar, so daß in der linken Aufsicht vier Kondensatoren im Bauelement vorhanden sind, während in der rechten Aufsicht dementsprechend acht Kondensatoren im Bauelement vorhanden sind.

Figur 2B zeigt einen Querschnitt durch die in Figur 2A in Aufsicht gezeigten Bauelemente entlang der mit A gekennzeichneten Linien. Dabei ist ein erster Elektrodenstapel 10B aus ersten Elektroden 10A zu erkennen, der über die Durchkontaktierungen, die Vias 6A, 6B elektrisch leitend mit der ersten Lotkugel 10 verbunden ist. Zwischen den Lotkugeln und den Durchkontaktierungen sind Under-bump-Metallisierungen (UBM) 7 angeordnet. Diese Under-bump-Metallisierungen müssen aber nicht vorhanden sein. Beispielsweise ist es möglich, daß die Lotkugeln auch auf den Durchkontaktierungen angeordnet sind. Weiterhin ist ein zweiter Elektrodenstapel 15B aus den zweiten Elektroden 15A vorhanden, der elektrisch leitend mit der zweiten Lotkugel 15 verbunden ist. Der erste Elektrodenstapel 10B und der zweite Elektrodenstapel 15B überlappen jeweils mit den Elektroden 20A des dritten Elektrodenstapels 20B, der über eine dritte Lotkugel 20 kontaktiert wird. Wenn an den unterschiedlichen Lotkugeln unterschiedliche Potentiale angelegt werden, kommt es in den Überlappungsbereichen zwischen Elektroden unterschiedlichen Potentials zu einem Kondensatoreffekt. Wenn darüber hinaus als Material für den Grundkörper 5 eine Varistorkeramik, beispielsweise auf der Basis von Zinkoxid verwendet wird, so läßt sich mittels dieses Bauelements eine interne Anordnung eines Varistors mit einem Kondensator realisieren. Vorteilhafterweise sind die Lotkugeln 10, 15, 20 auf einer Hauptoberfläche 300 des Grundkörpers angeordnet, wobei Durchkontaktierungen 6A, die näher an den Lotkugeln 10, 15, 20 sind, weiter entfernt von benachbarten Stirnflächen 500, 600 sind, als Durchkontaktierungen 6B, die weiter von den Lotkugeln 10, 15, 20 entfernt sind. Dies kann unter anderem den Vorteil haben, daß auf diese Weise die zu den Stirnflächen benachbarten Lotkugeln 10, 15 weiter von den Stirnflächen entfernt sind, als sie es wären, wenn alle Durchkontaktierungen 6A, 6B übereinander angeordnet wären. Dadurch wird unter anderem die Erzeugung der Lotkugeln und das Übereinanderstapeln der dielektrischen Schichten vereinfacht.

Figur 2C zeigt dabei ein Schaltbild des in Figur 2B mit einem Kreis versehenen Bereichs des Bauelements. Zu sehen ist, daß in diesem Bereich eine Parallelschaltung zwischen einem Varistor 50 und einem Kondensator 40 realisiert wird.

Figur 3A zeigt eine weitere vorteilhafte Ausführungsform eines erfindungsgemäßen Bauelements in der Aufsicht. Dabei ist analog zu Figur 2A eine Anordnung aus einer ersten 10A, einer zweiten 15A und dritten Elektrode 20A zu sehen, die jeweils unterschiedliche Lotkugeln 10, 15 und 20 kontaktieren und überlappen. Im Unterschied zu Figur 2A werden allerdings unterschiedlich große Überlappungsflächen zwischen der ersten Elektrode 10A und der dritten Elektrode 20A auf der einen Seite und zwischen der zweiten Elektrode 15A und der dritten Elektrode 20A auf der anderen Seite realisiert. Diese unterschiedlich großen Überlappungsflächen sind in der Figur mit 21 und 22 gekennzeichnet. Aufgrund der unterschiedlich großen Überlappungsflächen lassen sich damit besonders einfach unterschiedlich große Kapazitäten realisieren. In dieser Aufsicht sind insgesamt zwölf Vielschichtkondensatoren im Bauelementgrundkörper angeordnet, wobei jeweils 4 Vielschichtkondensatoren über eine gemeinsame dritte Elektrode intern miteinander verschaltet sind.

Figur 3B zeigt einen Querschnitt durch die in Figur 3A mit B bezeichneten Linie. Dabei sind die unterschiedlich großen Überlappungsbereiche 21 und 22 zwischen den ersten Elektroden 10A und den dritten Elektroden 20A und zwischen den zweiten Elektroden 15A und den dritten Elektroden 20A deutlich zu sehen.

Figur 4A zeigt in der Aufsicht eine weitere Ausführungsform eines erfindungsgemäßen Vielschichtbauelements. Im Gegensatz zu den bisher gezeigten Ausführungsformen kontaktiert hier die zweite Elektrode 15A abgesehen von der dritten Elektrode 20A auch noch die mit einer vierten Lotkugel 25 verbundene vierte Elektrode 25A. Weiterhin ist eine fünfte Lotkugel 30 vorhanden, die elektrisch leitend mit einer fünften Elektrode 30A verbunden ist und nur mit der vierten Elektrode 25A überlappt. Die vierte zusätzliche Elektrode überlappt also sowohl mit der zweiten, als auch mit der fünften Elektrode. Mit Hilfe dieser Anordnung lassen sich besonders einfach weitere interne Verschaltungen in erfindungsgemäßen Vielschichtbauelementen realisieren. In der Aufsicht dieses Bauelements sind insgesamt sechzehn Vielschichtkondensatoren zu erkennen, die jeweils an den Überlappungsbereichen zwischen den Elektroden unterschiedlicher Elektrodenstapel gebildet werden, wobei jeweils acht Vielschichtkondensatoren intern miteinander verschaltet sind.

Figur 4B zeigt einen Querschnitt durch das in Figur 4A in der Aufsicht gezeigte Bauelement entlang der mit C gekennzeichneten Linie. Die dritten Elektroden 20A können über die dritte Lotkugel 20, und die vierten Elektroden 25A über die vierte Lotkugel 25 an die Masse kontaktiert werden.

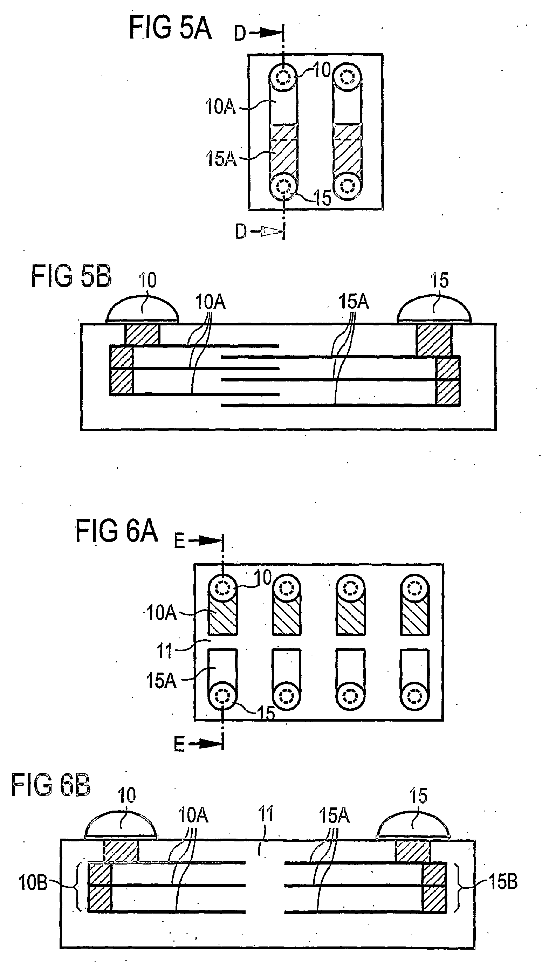

Figur 5A zeigt eine Aufsicht einer Ausführungsform eines erfindungsgemäßen Vielschichtbauelements, in dem zwei Vielschichtkondensatoren realisiert sind, die intern nicht miteinander verschaltet sind.

Figur 5B zeigt einen Querschnitt durch die in Figur 5A mit D gekennzeichnete Linie. Zu sehen sind erste Elektroden 10A, die mit zweiten Elektroden 15A überlappen und jeweils mit den Lotkugeln 10 und 15 elektrisch leitend verbunden sind.

Figur 6A zeigt eine Aufsicht auf eine Ausführungsform des Vielschichtbauelements, bei der sich insgesamt acht Elektroden gegenüber stehen ohne sich zu überlappen, so daß ein Bereich 11 zwischen den Elektroden im Grundkörper vorhanden ist, der keine Elektroden aufweist. Derartige Anordnungen können beispielsweise dazu dienen, den Bauelement-Widerstand, die Varistor-Spannung oder die Kapazität beliebig zu verändern.

Figur 6B zeigt dabei einen Querschnitt durch die in Figur 6A mit E gekennzeichnete Linie. Die beiden Elektrodenstapel 10B und 15B stehen sich im Grundkörper 5 gegenüber, wobei zwischen beiden Elektrodenstapeln der Bereich 11 ohne Elektroden vorhanden ist.

Figur 7A zeigt in der Aufsicht eine Anordnung aus mit Lotkugeln 10 und 15 verbundenen Elektroden 10A und 15A und sogenannten schwebenden Elektroden 60, die von keiner Lotkugel kontaktiert werden. Diese zusätzlichen Elektrodenschichten können besonders vorteilhaft für eine größere Gleichförmigkeit der elektrischen Charakteristika des Bauelements sorgen.

Figur 7B zeigt einen Querschnitt durch die in Figur 7A mit F gekennzeichnete Linie. Dabei ist zu erkennen, daß die zusätzlichen, schwebenden Elektroden 60 mit den ersten Elektroden 10A und den zweiten Elektroden 15A überlappen.

Figur 8 zeigt eine weitere, günstige Variante eines erfindungsgemäßen Vielschichtbauelements, bei der Elektroden 20A und 80A die von unterschiedlichen Lotkugeln 20 und 80 kontaktiert werden elektrisch leitend über eine Verbindung 70 miteinander verbunden sind. Dadurch lassen sich besonders vorteilhaft weitere interne Verschaltungen in erfindungsgemäßen Bauelementen realisieren.

Figur 9 zeigt im Querschnitt eine weitere Variante eines erfindungsgemäßen Vielschichtbauelements, bei dem Elektroden 10A und 15A, die untereinander nicht überlappen, mit einer einzigen großen Elektrode 20A überlappen, die von einer Lotkugel 20 kontaktiert wird und beispielsweise an die Masse kontaktiert sein kann.

Figur 10 zeigt im Querschnitt eine Anordnung aus einem erfindungsgemäßen Bauelement 1, das über die Lotkugeln 10, 15, 20 über Anschlußflächen 90 im lichten Abstand mittels Flip-Chip-Bauweise auf ein Trägersubstrat 100 montiert ist. Die Flip-Chip-Bauweise ermöglicht eine besonders einfache, schnelle und kostengünstige Montage der erfindungsgemäßen Bauelemente, wobei diese Bauelemente direkt nebeneinander ohne größere Abstände auf dem Substrat 100 montiert werden können.

Die Durchkontaktierungen können bei allen gezeigten Ausführungsformen z.B. durch Erzeugen von Durchbohrungen, z.B. mittels eines Stanzwerkzeugs im Grundkörper erzeugt werden, wobei dann ein elektrisch leitfähiges Material, das ausgewählt ist aus: Ag, AgPd, AgPdPt, AgPt, Pd, Pt und Cu in den Durchbohrungen angeordnet wird. Die Durchkontaktierungen in Form von Durchbohrungen weisen dabei vorteilhafterweise einen abgerundeten Querschnitt, wie z.B. in Fig. 2A gezeigt auf, können aber auch eckige Querschnitte aufweisen. Die Durchbohrungen können vorteilhafterweise in den Dielektrikumsschichten erzeugt werden, wobei dann das elektrisch leitfähige Material in die Durchbohrungen gefüllt wird. Die Durchkontaktierungen bilden im Grundkörper, wie z.B. in den Fig. 2A und 2B gezeigt Kanäle, die quer, bevorzugt senkrecht zu den Hauptoberflächen des keramischen Grundkörpers verlaufen. Auf den Hauptoberflächen bzw. nur auf einer Hauptoberfläche sind die Lotkugeln angeordnet. Anschließend können vorteilhafterweise die übereinandergestapelten Dielektrikumsschichten, z. B, keramische Grünfolien mit dem in den Durchbohrungen angeordneten elektrisch leitfähigen Material gemeinsam in einem Verfahrensschritt gesintert werden, wobei der fertig gesinterte Grundkörper mit den Durchkontaktierungen gebildet wird. Die Sintertemperatur wird dabei abhängig von der Beschaffenheit der Dielektrikumsschichten gewählt, z.B. 1000°C bis 1300°C bei Varistorkeramiken und bei anderen Keramiken etwa Temperaturen von 850°C bis 1100°C, z.B. bei Kondensatorkeramiken. Anschließend werden optional die Under-bump-Metallisierungen und die Lotkugeln erzeugt. Beispielsweise kann Lotpaste mittels Druckverfahren, z.B. im Siebdruckverfahren aufgebracht und dann aufgeschmolzen werden. Bei anderen Ausführungsformen der Erfindung können die Lotkugeln auch aufgesetzt und dann aufgeschmolzen werden oder z.B. mittels Tauchbenetzung im heißen Lot (immersion solder bumping) erzeugt werden. Möglich ist auch das sog. stud bumping, bei dem ein Lotdraht aufgeschmolzen und dann abgeschnitten wird, wobei die Lotkugeln erzeugt werden.

Die Erfindung beschränkt sich nicht auf die hier dargelegten Ausführungsbeispiele. Weitere Variationen sind vor allem bezüglich der Anzahl der im Grundkörper angeordneten passiven Bauelemente und ihrer internen Verschaltungen möglich.

## Patentansprüche

1. Elektrisches Vielschichtbauelement (1),
- dessen Funktion ausgewählt ist aus:
- Kondensator, temperaturabhängigem Widerstand und Varistor,
- mit einem aus übereinandergestapelten, Dielektrikumsschichten aufgebauten Grundkörper (5),
- mit mehreren im Grundkörper mit Abstand zwischen den Dielektrikumsschichten angeordneten elektrisch leitenden Elektrodenflächen, in denen Elektroden (10A, 15A) ausgebildet sind, .
- mit zumindest zwei Lotkugeln (10, 15) zur elektrischen Kontaktierung des Bauelements, die auf der Oberfläche des Grundkörpers (5) angeordnet sind,
- wobei die Lotkugeln (10, 15) über im Grundkörper angeordnete Durchkontaktierungen (6) elektrisch leitend mit zumindest einer Elektrode (10A, 15A) verbunden sind, so daß ein erster und ein zweiter Elektrodenstapel (10B, 15B) ausgebildet sind, die jeweils nur eine Lotkugel (10,15) kontaktieren,
**dadurch gekennzeichnet, dass**
- die Elektroden (10A, 15A) eines Elektrodenstapels (10B, 15B) durch mehrere in verschiedenen Dielektrikumsschichten angeordnete, gegeneinander versetzte Durchkontaktierungen (6A, 6B) elektrisch leitend verbunden sind.

2. Vielschichtbauelement nach dem vorhergehenden Anspruch,
- bei dem mehrere, in unterschiedlichen Elektrodenflächen angeordnete Elektroden (10A) in einem Elektrodenstapel (10B) vorhanden sind,
- wobei diese Elektroden (10A) mittels der im Grundkörper angeordneten Durchkontaktierungen (6) untereinander elektrisch leitend verbunden sind.

3. Vielschichtbauelement (1) nach einem der vorhergehenden Ansprüche,
- bei dem sich die zumindest zwei Elektrodenstapel (10B, 15B) im Grundkörper (5) gegenüberstehen, wobei zwischen den beiden Elektrodenstapeln ein Bereich (11) des Grundkörpers (5) vorhanden ist, der keine Elektroden aufweist.

4. Vielschichtbauelement nach einem der Ansprüche 1 oder 2,
- bei dem die Elektroden (10A, 15A) überlappend angeordnet sind.

5. Vielschichtbauelement (1) nach einem der vorhergehenden Ansprüche,
- bei dem zusätzliche, elektrisch leitende Elektroden (60) im Grundkörper (5) vorhanden sind, die keine der Lotkugeln (10,15) kontaktieren.

6. Vielschichtbauelement nach dem vorhergehenden Anspruch,
- bei dem die zusätzlichen Elektroden (60) mit den Elektroden (10A, 15A) des ersten (10B) und zweiten Elektrodenstapels (15B) überlappen.

7. Vielschichtbauelement (1) nach einem der vorherigen Ansprüche,
- bei dem zumindest ein dritter Elektrodenstapel (20B) der zumindest eine zusätzlich vorhandene elektrisch leitende Elektrode (20A) umfaßt im Grundkörper (5) angeordnet ist, und über Durchkontaktierungen (6) elektrisch leitend mit einer dritten Lotkugel (20) auf der Oberfläche des Grundkörpers verbunden ist,
- wobei die zumindest eine Elektrode (20A) des dritten Elektrodenstapels (20B) mit einer Elektrode (10A, 15A) des ersten (10B) und des zweiten Elektrodenstapels (15B) überlappt.

8. Vielschichtbauelement nach dem vorhergehenden Anspruch,
- wobei die Elektroden (10A, 15A) des ersten (10B) und des zweiten Elektrodenstapels (15B) nicht überlappen.

9. Vielschichtbauelement nach einem der vorhergehenden Ansprüche 7 oder 8,
- bei dem der erste (10B), zweite (15B) und dritte Elektrodenstapel (20B) jeweils eine Elektrode (10A, 15A, 20A) umfassen.

10. Vielschichtbauelement nach einem der Ansprüche 7 bis 9,
- bei dem die Überlappungsflächen (21, 22) zwischen den Elektroden von unterschiedlichen Paaren von Elektrodenstapeln (10B, 15B, 20B) unterschiedlich groß sind.

11. Vielschichtbauelement nach dem vorhergehenden Anspruch,
- bei dem die Überlappungsflächen (21, 22) zwischen dem dritten Elektrodenstapel (20B) und dem zweiten (15B) und ersten Elektrodenstapel (10B) ungleich groß sind.

12. Vielschichtbauelement nach einem der Ansprüche 7 bis 11,
- bei dem ein vierter (25B) und ein fünfter Elektrodenstapel (30B) mit elektrisch leitenden Elektroden (25A, 30A) vorhanden sind, die über Durchkontaktierungen (6) jeweils mit einer vierten (25) und fünften Lotkugel (30) auf der Oberfläche des Grundkörpers (5) verbunden sind,
- wobei die Elektroden (25A) des vierten Elektrodenstapels (25B) mit den Elektroden (15A) des zweiten Elektrodenstapels (15B) und den Elektroden (30A) des fünften Elektrodenstapels (30B) überlappen.

13. Vielschichtbauelement nach einem der vorhergehenden Ansprüche,
- bei dem weitere Elektrodenstapel, die mit Lotkugeln verbunden sind im Grundkörper vorhanden sind.

14. Vielschichtbauelement nach dem vorhergehenden Anspruch,
- bei dem zumindest einige der Elektroden (20A, 80A) von unterschiedlichen Elektrodenstapeln (20B, 80B) elektrisch leitend miteinander verbunden sind.

15. Vielschichtbauelement nach einem der vorhergehenden Ansprüche,
- bei dem alle Lotkugeln auf derselben Grundfläche des Grundkörpers angeordnet sind.

16. Vielschichtbauelement nach einem der vorhergehenden Ansprüche,
- bei dem die Dielektrikumsschichten ein keramisches Material umfassen.

17. Vielschichtbauelement nach dem vorhergehenden Anspruch,
- bei dem das keramische Material eine Varistorkeramik auf der Basis von ZnO-Bi oder ZnO-Pr umfaßt.

18. Vielschichtbauelement nach Anspruch 16,
- bei dem das keramische Material eine Kondensatorkeramik umfaßt, die aus folgenden Materialien ausgewählt ist:
- NP0-Keramiken z.B. (Sm,Pa) NiCdO₃ und dotiertes BaTiO₃.

19. Vielschichtbauelement nach Anspruch 16,
- bei dem das keramische Material aus folgenden NTC-Keramiken ausgewählt ist:
- Nickel Mangan Spinelle und Perowskite.

20. Vielschichtbauelement nach einem der vorhergehenden Ansprüche,
- bei dem die Dielektrikumsschichten nichtkeramisches Material umfassen, das Glas ist.

21. Vielschichtbauelement nach einem der vorhergehenden Ansprüche,
- bei dem mindestens 5 Elektrodenstapel im Grundkörper vorhanden sind,
- bei dem der Grundkörper eine Grundfläche aufweist, die kleiner als 2,5 mm² ist,
- wobei fünf Lotkugeln zur Kontaktierung der Elektrodenstapel auf derselben Hauptoberfläche angeordnet sind.

22. Vielschichtbauelement nach einem der vorhergehenden Ansprüche 1 bis 20,
- bei dem mindestens 9 Elektrodenstapel im Grundkörper vorhanden sind,
- bei dem der Grundkörper eine Grundfläche aufweist, die kleiner als 5,12 mm² ist,
- wobei 9 Lotkugeln zur Kontaktierung der Elektrodenstapel auf derselben Hauptoberfläche angeordnet sind.

23. Vielschichtbauelement nach einem der vorhergehenden Ansprüche 1 bis 20,
- bei dem mindestens 11 Elektrodenstapel im Grundkörper vorhanden sind,
- bei dem der Grundkörper eine Grundfläche aufweist, die kleiner als 8 mm² ist,
- wobei die 11 Lotkugeln zur Kontaktierung der Elektrodenstapel auf derselben Hauptoberfläche angeordnet sind.

24. Vielschichtbauelement nach einem der vorhergehenden Ansprüche,
- bei dem die Durchkontaktierungen (6A, 6B) in Form von Kanälen im Grundkörper vorliegen, in denen ein elektrisch leitfähiges Material angeordnet ist.

25. Vielschichtbauelement nach dem vorhergehenden Anspruch,
- bei dem die Durchbohrungen einen runden oder rechteckigen Querschnitt aufweisen.

26. Vielschichtbauelement nach einem der vorhergehenden Ansprüche,
- bei dem der Grundkörper zwei gegenüberliegende Hauptoberflächen (300, 400) und zwei Stirnflächen (500, 600) aufweist, wobei die Lotkugeln (10, 15) auf den Hauptoberflächen (300, 400) angeordnet sind,
- bei dem diejenigen Durchkontaktierungen (6A), die den Lotkugeln (10, 15) am nächsten sind, einen größeren Abstand zu benachbarten Stirnflächen (500, 600) des Bauelements aufweisen, als die Durchkontaktierungen (6B), die weiter von den Lotkugeln (10, 15) entfernt sind.

27. Vielschichtbauelement nach Anspruch 24,
- bei dem das elektrisch leitfähige Material aus folgenden Komponenten ausgewählt ist: Ag, AgPd, AgPt, AgPdPt, Pd, Pt und Cu.

28. Anordnung, ein Vielschichtbauelement (1) nach einem der vorhergehenden Ansprüche enthaltend,
- mit einem Trägersubstrat (100), welches auf seiner Oberfläche Anschlußflächen (90) zur Kontaktierung des Bauelements aufweist,
- wobei das Vielschichtbauelement mittels der Lotkugeln 10, 15, 20) über die Anschlußflächen (90) im lichten Abstand zum Trägersubstrat (100) in Flip-Chip-Anordnung elektrisch leitend auf dem Trägersubstrat montiert ist.

29. Verfahren zur Herstellung eines Vielschichtbauelements mit den Verfahrensschritten:
A) ein Grundkörper (5) mit im Inneren angeordneten Elektroden (10A, 15A) und Durchkontaktierungen (6A, 6B) wird **dadurch** gebildet, daß ein Schichtstapel aus Dielektrikumsschichten mit Durchbohrungen und dazwischen angeordneten Elektroden (10A, 15A) zur Ausbildung von Elektrodenstapeln (10B, 15B) erzeugt wird, wobei in den Durchbohrungen ein elektrisch leitfähiges Material angeordnet wird und wobei im fertigen Vielschichtbauelement die Elektroden (10A, 15A) eines Elektrodenstapels (10B, 15B) durch die Durchkontaktierungen (6A, 6B) elektrisch leitend verbunden sind, die in verschiedenen Dielektrikumsschichten gegeneinander versetzt angeordnet sind,
B) auf den Durchkontaktierungen werden Lotkugeln (10, 15) erzeugt.

30. Verfahren nach dem vorherigen Anspruch,
- bei dem im Verfahrensschritt A) ein Grundkörper mit zwei Hauptoberflächen (300, 400) und zumindest zwei Stirnflächen (500, 600) gebildet wird, wobei die Durchkontaktierungen (6A, 6B) in Form von quer zu den Hauptoberflächen verlaufenden Kanälen im Inneren des Grundkörpers (5) erzeugt werden,
- bei dem im Verfahrensschritt B) die Lotkugeln auf den Hauptoberflächen erzeugt werden.

31. Verfahren nach einem der Ansprüche 29 oder 30,
- bei dem im Verfahrensschritt A) die Durchkontaktierungen (6A, 6B) in verschiedenen Dielektrikumsschichten erzeugt werden, wobei Durchkontaktierungen (6A, 6B) in benachbarten Dielektrikumsschichten gegeneinander versetzt erzeugt werden.

32. Verfahren nach einem der Ansprüche 29 bis 31,
- bei dem im Verfahrensschritt A) die Durchkontaktierungen (6A), die den Lotkugeln (10, 15) an nächsten sind, einen größeren Abstand zu benachbarten Stirnflächen (500, 600) aufweisen, als Durchkontaktierungen (6B), die weiter entfernt sind von den Lotkugeln (10, 15).

## Claims

1. Electric multilayer component (1),
- the function of which is selected from:
- capacitor, thermistor and varistor,
- comprising a basic body (5) constructed from dielectric layers stacked one above another,
- comprising a plurality of electrically conductive electrode areas arranged in the basic body at a distance between the dielectric layers, electrodes (10A, 15A) being formed in said electrode areas,
- comprising at least two solder balls (10, 15) for making electrical contact with the component, which are arranged on the surface of the basic body (5),
- wherein the solder balls (10, 15), are electrically conductively connected to at least one electrode (10A, 15A) by means of plated-through holes (6) arranged in the basic body, such that a first and a second electrode stack (10B, 15B) are formed, which respectively make contact with only one solder ball (10, 15),
**characterized in that**
- the electrodes (10A, 15A) of an electrode stack (10B, 15B) are electrically conductively connected by a plurality of plated-through holes (6A, 6B) which are arranged in different dielectric layers and are offset relative to one another.

2. Multilayer component according to the preceding claim,
- in which a plurality of electrodes (10A) arranged in different electrode areas are present in an electrode stack (10B),
- wherein said electrodes (10A) are electrically conductively connected among one another by means of the plated-through holes (6) arranged in the basic body.

3. Multilayer component (1) according to either of the preceding claims,
- in which the at least two electrode stacks (10B, 15B) are opposite one another in the basic body (5), wherein a region (11) of the basic body (5) which has no electrodes is present between the two electrode stacks.

4. Multilayer component according to either of Claims 1 and 2,
- in which the electrodes (10A, 15A) are arranged in an overlapping fashion.

5. Multilayer component (1) according to any of the preceding claims,
- in which additional, electrically conductive electrodes (60) which make contact with none of the solder balls (10, 15) are present in the basic body (5).

6. Multilayer component according to the preceding claim,
- in which the additional electrodes (60) overlap the electrodes (10A, 15A) of the first (10B) and second electrode stack (15B).

7. Multilayer component (1) according to any of the preceding claims,
- in which at least one third electrode stack (20B) comprising at least one electrically conductive electrode (20A) additionally present is arranged in the basic body (5), and is electrically conductively connected to a third solder ball (20) on the surface of the basic body by means of plated-through holes (6),
- wherein the at least one electrode (20A) of the third electrode stack (20B) overlaps an electrode (10A, 15A) of the first (10B) and of the second electrode stack (15B).

8. Multilayer component according to the preceding claim,
- wherein the electrodes (10A, 15BA) of the first (10B) and of the second electrode stack (15B) do not overlap.

9. Multilayer component according to either of the preceding Claims 7 and 8,
- in which the first (10B), second (15B) and third electrode stack (20B) in each case comprise one electrode (10A, 15A, 20A).

10. Multilayer component according to any of Claims 7 to 9,
- in which the overlap areas (21, 22) between the electrodes of different pairs of electrode stacks (10B, 15B, 20B) are different in magnitude.

11. Multilayer component according to the preceding claim,
- in which the overlap areas (21, 22) between the third electrode stack (20B) and the second (15B) and first electrode stack (10B) are not identical in magnitude.

12. Multilayer component according to any of Claims 7 to 11,
- in which a fourth (25B) and a fifth electrode stack (30B) having electrically conductive electrodes (25A, 30A) are present, which are respectively connected to a fourth (25) and fifth solder ball (30) on the surface of the basic body (5) by means of plated-through holes (6),
- wherein the electrodes (25A) of the fourth electrode stack (25B) overlap the electrodes (15A) of the second electrode stack (15B) and the electrodes (30A) of the fifth electrode stack (30B).

13. Multilayer component according to any of the preceding claims,
- in which further electrode stacks connected to solder balls are present in the basic body.

14. Multilayer component according to the preceding claim,
- in which at least some of the electrodes (20A, 80A) of different electrode stacks (20B, 80B) are electrically conductively connected to one another.

15. Multilayer component according to any of the preceding claims,
- in which all the solder balls are arranged on the same base area of the basic body.

16. Multilayer component according to any of the preceding claims,
- in which the dielectric layers comprise a ceramic material.

17. Multilayer component according to the preceding claim,
- in which the ceramic material comprises a varistor ceramic based on ZnO-Bi or ZnO-Pr.

18. Multilayer component according to Claim 16,
- in which the ceramic material comprises a capacitor ceramic selected from the following materials:
- NPO ceramics, e.g. (Sm, Pa) NiCdO₃, and doped BaTiO₃.

19. Multilayer component according to Claim 16,
- in which the ceramic material is selected from the following NTC ceramics:
- nickel manganese spinels and perovskites.

20. Multilayer component according to any of the preceding claims,
- in which the dielectric layers comprise non-ceramic material, which is glass.

21. Multilayer component according to any of the preceding claims,
- in which at least 5 electrode stacks are present in the basic body,
- in which the basic body has a base area that is smaller than 2.5 mm²,
- wherein five solder balls for making contact with the electrode stacks are arranged on the same main surface.

22. Multilayer component according to any of the preceding Claims 1 to 20,
- in which at least 9 electrode stacks are present in the basic body,
- in which the basic body has a base area that is smaller than 5.12 mm²,
- wherein 9 solder balls for making contact with the electrode stacks are arranged on the same main surface.

23. Multilayer component according to any of the preceding Claims 1 to 20,
- in which at least 11 electrode stacks are present in the basic body,
- in which the basic body has a base area that is smaller than 8 mm²,
- wherein 11 solder balls for making contact with the electrode stacks are arranged on the same main surface.

24. Multilayer component according to any of the preceding claims,
- in which the plated-through holes (6A, 6B) are present in the form of channels in the basic body in which an electrically conductive material is arranged.

25. Multilayer component according to the preceding claim,
- in which the through holes have a round or rectangular cross section.

26. Multilayer component according to any of the preceding claims,
- in which the basic body has two opposite main surfaces (300, 400) and two end faces (500, 600), wherein the solder balls (10, 15) are arranged on the main surfaces (300, 400),
- in which those plated-through holes (6A), which are closest to the solder balls (10, 15) are at a greater distance from adjacent end faces (500, 600) of the component than the plated-through holes (6B) which are further away from the solder balls (10, 15).

27. Multilayer component according to Claim 24,
- in which the electrically conductive material is selected from the following components: Ag, AgPd, AgPt, AgPdPt, Pd, Pt and Cu.

28. Arrangement, containing a multilayer component (1) according to any of the preceding claims,
- comprising a carrier substrate (100), which has on its surface connection pads (90) for making contact with the component,
- wherein the multilayer component is electrically conductively mounted on the carrier substrate by means of the solder balls (10, 15, 20) in a flip-chip arrangement at a clear distance from the carrier substrate (100) by way of the connection pads (90).

29. Method for producing a multilayer component comprising the following method steps:
A) a basic body (5) having electrodes (10A, 15A) and plated-through holes (6A, 6B) arranged in the interior is formed by means of the production of a layer stack composed of dielectric layers with through holes and electrodes (10A, 15A) arranged therebetween for the formation of electrode stacks (10B, 15B), wherein an electrically conductive material is arranged in the through holes, and wherein, in the finished multilayer component, the electrodes (10A, 15A) of an electrode stack (10B, 15B) are electrically conductively connected by the plated-through holes (6A, 6B), which are arranged offset with respect to one another in different dielectric layers,
B) solder balls (10, 15) are produced on the plated-through holes.

30. Method according to the preceding claim,
- in which, in method step A), a basic body having two main surfaces (300, 400) and at least two end faces (500, 600) is formed, wherein the plated-through holes (6A, 6B) are produced in the form of channels running transversely with respect to the main surfaces in the interior of the basic body (5),
- in which, in method step B), the solder balls are produced on the main surfaces.

31. Method according to either of Claims 29 and 30,
- in which, in method step A), the plated-through holes (6A, 6B), are produced in different dielectric layers, wherein plated-through holes (6A, 6B) are produced offset with respect to one another in adjacent dielectric layers.

32. Method according to any of Claims 29 to 31,
- in which, in method step A), the plated-through holes (6A) which are closest to the solder balls (10, 15) are at a greater distance from adjacent end faces (500, 600) than plated-through holes (6B) which are further away from the solder balls (10, 15).

## Revendications

1. Composant (1) électrique à plusieurs couches,
- dont la fonction est choisie parmi :
- condensateur, résistance dépendante de la température et varistance,
- comprenant un corps (5) de base constitué de couches diélectriques empilées les unes sur les autres,
- comprenant plusieurs surfaces d'électrodes conductrices de l'électricité disposées dans le corps de base à distance entre les couches diélectriques, surfaces dans lesquelles des électrodes (10A, 15A) sont formées,
- comprenant au moins deux billes (10, 15) de brasure pour la mise en contact électrique du composant, qui sont disposées sur la surface du corps (5) de base,
- dans lequel les billes (10, 15) de brasure sont reliées d'une manière conductrice de l'électricité à au moins une électrode (15A) par des traversées (6) disposées dans le corps de base, de manière à former une première et une deuxième piles (10B, 15B) d'électrodes, qui ne contactent respectivement qu'une bille (10, 15) de brasure,
**caractérisé en ce que**
- les électrodes (10A, 15A) d'une pile (10B, 15B) d'électrodes sont reliées d'une manière conductrice de l'électricité par plusieurs traversées (6A, 6B) disposées dans diverses couches diélectriques en étant décalées les unes par rapport aux autres.

2. Composant à plusieurs couches suivant la revendication précédente,
- dans lequel plusieurs électrodes (10A) disposées dans des surfaces d'électrodes différentes sont présentes dans une pile (10B) d'électrodes,
- dans lequel ces électrodes (10A) sont reliées entre elles d'une manière conductrice de l'électricité au moyen des traversées (6) disposées dans le corps de base.

3. Composant (1) à plusieurs couches suivant l'une des revendications précédentes,
- dans lequel des au moins deux piles (10B, 15B) d'électrodes s'affrontent dans le corps (5) de base, une partie (11) du corps (5) de base, qui n'a pas d'électrodes, étant présente entre les deux piles d'électrodes.

4. Composant à plusieurs couches suivant l'une des revendications 1 ou 2,
- dans lequel les électrodes (10A, 15A) sont disposées en se chevauchant.

5. Composant (1) à plusieurs couches suivant l'une des revendications précédentes,
- dans lequel il y a des électrodes (60) supplémentaires conductrices de l'électricité dans le corps (5) de base, qui ne sont pas en contact avec les billes (10, 15) de brasure.

6. Composant à plusieurs couches suivant la revendication précédente,
- dans lequel les électrodes (60) supplémentaires chevauchent les électrodes (10A, 15A) de la première (10B) et de la deuxième piles (15B) d'électrodes.

7. Composant (1) à plusieurs couches suivant l'une des revendications précédentes,
- dans lequel au moins une troisième pile (20B), qui comprend au moins une électrode (20A) conductrice de l'électricité présente supplémentairement, est disposée dans le corps (5) de base et est reliée d'une manière conductrice de l'électricité à une troisième bille (20) de brasure sur la surface du corps de base par des traversées (6),
- dans lequel la au moins une électrode (20A) de la troisième pile (20B) d'électrodes chevauche une électrode (10A, 15A) de la première (10B) et de la deuxième piles (15B) d'électrodes.

8. Composant à plusieurs couches suivant la revendication précédente,
- dans lequel les électrodes (10A, 15A) de la première (10B) et de la deuxième piles (15B) d'électrodes ne se chevauchent pas.

9. Composant à plusieurs couches suivant l'une des revendications précédentes 7 ou 8,
- dans lequel la première (10B), la deuxième (15B) et la troisième piles (20B) d'électrodes comprennent respectivement une électrode (10A, 15A, 20A).

10. Composant à plusieurs couches suivant l'une des revendications 7 à 9,
- dans lequel les surfaces (21, 22) de chevauchement entre les électrodes de paires différentes de piles (10B, 15B, 20B) d'électrodes ont des dimensions différentes.

11. Composant à plusieurs couches suivant la revendication précédente,
- dans lequel les surfaces (21, 22) de chevauchement entre la troisième pile (20B) d'électrodes et la deuxième (15B) et la première piles (10B) d'électrodes ont des dimensions qui ne sont pas les mêmes.

12. Composant à plusieurs couches suivant l'une des revendications 7 à 11,
- dans lequel une quatrième (25B) et une cinquième piles (30B) d'électrodes ayant des électrodes (25A, 30A) conductrices de l'électricité sont présentes et sont reliées par des traversées (6) respectivement à une quatrième (25) et à une cinquième billes (30) de brasure sur la surface du corps (5) de base,
- dans lequel les électrodes (25A) de la quatrième pile (25B) d'électrodes chevauchent les électrodes (15A) de la deuxième pile (15B) d'électrodes et les électrodes (30A) de la cinquième pile (30B) d'électrodes.

13. Composant à plusieurs couches suivant l'une des revendications précédentes,
- dans lequel d'autres piles d'électrodes, qui sont reliées à des billes de brasure, sont présentes dans le corps de base.

14. Composant à plusieurs couches suivant la revendication précédente,
- dans lequel au moins certaines des électrodes (20A, 80A) de piles (20B, 80B) d'électrodes différentes sont reliées entre elles d'une manière conductrice de l'électricité.

15. Composant à plusieurs couches suivant l'une des revendications précédentes,
- dans lequel toutes les billes de brasure sont disposées sur la même surface de base du corps de base.

16. Composant à plusieurs couches suivant l'une des revendications précédentes,
- dans lequel les couches diélectriques comprennent un matériau céramique.

17. Composant à plusieurs couches suivant la revendication précédente,
- dans lequel le matériau céramique comprend une céramique de varistance à base de ZnO-Bi ou de ZnO-Pr.

18. Composant à plusieurs couches suivant la revendication 16,
- dans lequel le matériau céramique comprend une céramique de condensateur, qui est choisie parmi les matériaux suivantes :
- céramique NPO, par exemple (Sm,Pa)NiCdO₃, et BaTiO₃ doté.

19. Composant à plusieurs couches suivant la revendication 16,
- dans lequel le matériau céramique est choisi parmi les céramiques NTC suivantes :
- spinelle de nickel et de manganèse et perowskite.

20. Composant à plusieurs couches suivant l'une des revendications précédentes,
- dans lequel les couches diélectriques comprennent du matériau non céramique qui est du verre.

21. Composant à plusieurs couches suivant l'une des revendications précédentes,
- dans lequel il y a au moins 5 piles d'électrodes dans le corps de base,
- dans lequel le corps de base a une surface de base qui est plus petite que 2,5 mm²,
- dans lequel 5 billes de brasure sont disposées pour la mise en contact des piles d'électrodes sur la même surface principale.

22. Composant à plusieurs couches suivant l'une des revendications précédentes 1 à 20,
- dans lequel il y a au moins 9 piles d'électrodes dans le corps de base,
- dans lequel le corps de base a une surface de base qui est plus petite que 5,12 mm²,
- dans lequel 9 billes de brasure pour la mise en contact des piles d'électrodes sont disposées sur la même surface principale.

23. Composant à plusieurs couches suivant l'une des revendications précédentes 1 à 20,
- dans lequel il y au moins 11 piles d'électrodes dans le corps de base,
- dans lequel le corps de base a une surface de base qui est plus petite que 8 mm²,
- dans lequel les 11 billes de brasure pour la mise en contact des piles d'électrodes sont disposées sur la même surface principale.

24. Composant à plusieurs couches suivant l'une des revendications précédentes,
- dans lequel les traversées (6A, 6B) se présentent sous la forme de canaux dans le corps de base, dans lesquels est disposé un matériau conducteur de l'électricité.

25. Composant à plusieurs couches suivant la revendication précédente,
- dans lequel les traversées ont une section transversale circulaire ou rectangulaire.

26. Composant à plusieurs couches suivant l'une des revendications précédentes,
- dans lequel le corps de base a deux surfaces (300, 400) principales opposées et deux surfaces (500, 600) frontales, les billes (10, 15) de brasure étant disposées sur les surfaces (300, 400) principales,
- dans lequel les traversées (6A), qui sont les plus proches des billes (10, 15) de brasure, sont à une distance plus grande des surfaces (500, 600) frontales voisines du composant que les traversées (6B), qui sont plus éloignées des billes (10, 15) de brasure.

27. Composant à plusieurs couches suivant la revendication 24,
- dans lequel le matériau conducteur de l'électricité est choisi parmi les composants suivants : Ag, AgPd, AgPt, AgPdPt, Pd, Pt et Cu.

28. Dispositif comportant un composant (1) à plusieurs couches suivant l'une des revendications précédents,
- comprenant un substrat (100) formant support, qui a sur sa surface des surfaces (90) de borne pour la mise en contact du composant,
- dans lequel le composant à plusieurs couches est monté d'une manière conductrice de l'électricité sur le substrat formant support suivant un agencement flip-chip à l'aide des billes (10, 15, 20) de brasure par les surfaces (90) de borne dans la distance libre par rapport au substrat (100) formant support.

29. Procédé de production d'un composant à plusieurs couches, comprenant les stades de procédé, dans lesquels :
A) on forme un corps (5) de base ayant des électrodes (10A, 15A) et des traversées (6A, 6B) disposées à l'intérieur en produisant une pile de couches diélectriques ayant des traversées et des électrodes (10A, 15A) interposées pour former des piles (10B, 15B) d'électrodes, un matériau conducteur de l'électricité étant mis dans les traversées et, dans le composant à plusieurs couches finies, les électrodes (10A, 15A) d'une pile (10B, 15B) d'électrodes étant reliées d'une manière conductrice de l'électricité par les traversées (6A, 6B), qui sont disposées en étant décalées les unes par rapport aux autres dans diverses couches diélectriques,
B) on produit des billes (10, 15) de brasure sur les traversées.

30. Procédé suivant la revendication précédente,
- dans lequel, dans le stade A) du procédé, on forme un corps de base ayant deux surfaces (300, 400) principales et au moins deux surfaces (500, 600) frontales, les traversées (6A, 6B) étant produites à l'intérieur du corps (5) de base sous la forme de canaux s'étendant transversalement aux surfaces principales,
- dans lequel, dans le stade B) du procédé, on produit les billes de brasure sur les surfaces principale.

31. Procédé suivant l'une des revendications 20 ou 30,
- dans lequel, dans le stade A) du procédé, on produit les traversées (6A, 6B) dans des couches diélectriques différentes, des traversées (6A, 6B) étant produites en étant décalées les unes par rapport aux autres dans des couches diélectriques voisines.

32. Procédé suivant l'une des revendications 29 à 31,
- dans lequel, dans le stade A) du procédé, les traversées (6A), qui sont les plus proches des billes (10, 15) de brasure, sont à une distance plus grande des surfaces (500, 600) frontales voisines que des traversées, qui sont plus éloignées des billes (10, 15) de brasure.
